# NEUE EUROPÄISCHE PATENTSCHRIFT

(11) **EP 3 186 325 B2**
(45) Veröffentlichungstag und Bekanntmachung des Hinweises auf die Entscheidung über den Einspruch: **09.08.2023**
(45) Hinweis auf die Patenterteilung: 03.06.2020
(21) Anmeldenummer: 15753063.5
(22) Anmeldetag: 24.08.2015
(51) Int. Cl.: C09J 7/40

(54) **HALBTRANSPARENTE TRENNFOLIE FÜR UV-EMPFINDLICHE HAFTKLEBSTOFFE**
SEMI-TRANSPARENT SEPARATING FILM FOR UV-SENSITIVE PRESSURE-SENSITIVE ADHESIVES
FEUILLE DE SÉPARATION SEMI-TRANSPARENTE POUR DES ADHÉSIFS AUTOCOLLANTS SENSIBLES AUX UV

(30) Priorität: 27.08.2014 EP 14182521
(43) Veröffentlichungstag der Anmeldung: 05.07.2017
(73) Patentinhaber: Sika Technology AG, 6340 Baar (CH)
(72) Erfinder: HÜBSCHER, Peter, CH-6012 Obernau (CH)
(74) Vertreter: Sika Patent Attorneys
(86) Internationale Anmeldenummer: PCT/EP2015/069376
(87) Internationale Veröffentlichungsnummer: WO 2016/030338

(56) Entgegenhaltungen:
- EP-A1- 0 501 239
- EP-A1- 1 582 555
- EP-A2- 0 810 253
- DE-A1-102009 041 841
- DE-A1-102009 041 841

## Beschreibung

### Technisches Gebiet

Die Erfindung betrifft eine halbtransparente Trennfolie zum Schutz von UVempfindlichen Haftklebstoffen, Kompositstrukturen aus derartigen mit Klebstoffen beschichteten Trennfolien, wasserdichte Membranen, die eine Beschichtung aus einem Klebstoff und einer entsprechenden Trennfolie aufweisen, sowie die Verwendung solcher Membranen zur Abdichtung von Bauwerken gegen Wasser.

### Stand der Technik

Zur Abdichtung von Untergründen gegen Wasserdurchstoß werden in der Baubranche gewöhnlich wasserdichte Membranen verwendet. Beispielsweise beschreibt die US 4,065,924 eine Schutzschicht, verbunden mit einer Oberschicht, wobei die Schutzschicht auf dem Untergrund angeordnet ist und die O den Verbund mit dem aufgetragenen Beton gewährleistet, indem sie von dem aufgetragenen Beton durchsetzt wird.

In der Regel werden wasserdichte Membranen zur Abdichtung von Bauwerken nicht in der für die Endapplikation erforderlichen Größe angefertigt, sondern in Form von einzelnen Bahnen zur Verfügung gestellt. Diese Bahnen müssen, um eine vollständige Abdichtung des Bauwerks gegen Wasser gewährleisten zu können, nach der Befestigung an den Bauwerken in den Überlappungsbereichen einzelner Membranbahnen miteinander verbunden werden. Dies erfolgt entweder durch Verschweißen der einzelnen Membranbahnen miteinander, oder mit Hilfe eines Klebstoffs, wie beispielsweise einem Haftklebstoff. Ein Verschweißen hat zwar den Vorteil, dass die einzelnen Membranschichten verbunden werden können, ohne dass ein Klebstoff erforderlich ist, für das Verschweißen müssen die einzelnen Membranbahnen jedoch erhitzt und miteinander in Kontakt gebracht werden, was zeitaufwändig ist, und den Einsatz von zusätzlichen Gerätschaften erforderlich macht. Bei falscher Verfahrensführung können zudem die Membranschichten beschädigt werden. Diese Probleme können bei einer Verbindung einzelner Membranbahnen über Haftklebstoffe vermieden werden. Eine solche Verbindung lässt sich zudem sehr einfach durchführen, indem eine gegebenenfalls auf der Haftklebstoffschicht befindliche Trennfolie (auch als Release-Liner bezeichnet) von der Klebstoffschicht abgezogen und die Membran anschließend über die Klebstoffschicht auf eine darunter angeordnete zweite Membranschicht gedrückt wird. Dadurch, dass der Haftklebstoff bereits bei der Herstellung der einzelnen Membranbahnen auf der Membran angebracht wird, kann für den Klebstoff gewährleistet werden, dass dieser vollflächig auf dem zu verklebenden Membranbereich vorhanden ist. Dadurch können, im Gegensatz zu einem durch Verschweißen hergestellten Verbund, Fehler in der Schweißnaht vermieden werden, durch die Wasser durch die Membranschicht dringen kann.

Ein mit konventionell eingesetzten Haftklebstoffen verbundenes Problem besteht allerdings darin, dass diese in der Regel gegenüber UV/Vis-Strahlung empfindlich sind. Unter UV-Empfindlichkeit ist hierbei insbesondere eine Empfindlichkeit gegenüber elektromagnetischer Strahlung mit einer Wellenlänge von etwa 300 bis 400 nm gemeint, wie sie in der Globalstrahlung enthalten ist. Vis-Strahlung bezeichnet hingegen den Wellenlängenbereich von etwa 400 bis 700 nm. Die bezeichneten Klebstoffe können, je nach Rezeptierung, auch im Bereich von 400 bis 500 nm gegenüber Globalstrahlung empfindlich sein und sich chemisch abbauen, was zu einer Verminderung oder zu einem Versagen der Haftklebekraft führt. Dies hat zur Folge, dass die Haftklebstoffschicht vor der Verklebung durch eine Trennfolie vor deaktivierender UV/Vis-Strahlung geschützt oder zügig verarbeitet werden muss, damit eine längere Exposition des Haftklebstoffs gegenüber solcher Strahlung vermieden wird. Insbesondere auf größeren Baustellen ist eine zügige Verarbeitung jedoch häufig nicht möglich, so dass Membranbahnen bis zu drei Monate ausgerollt liegenbleiben können, bevor sie miteinander verklebt werden. In diesem Zeitraum wird die Klebstoffschicht nur durch eine Trennfolie geschützt, die demzufolge so ausgelegt sein muss, dass sie möglichst wenig deaktivierende UV/Vis-Strahlung auf den Haftklebstoff kommen lässt. Andernfalls würde der Klebstoff durch photooxidative Prozesse deaktiviert, was zu einer signifikanten Verminderung der Klebekraft führen würde. Ein solcher Verlust an Klebekraft ist höchst nachteilig, da dies die Hinterlaufsicherheit und Haftung nach der Verklebung signifikant beeinträchtigt.

Die offensichtliche Lösung des Problems eines Schutzes von sensitiven Haftklebstoffen gegen deaktivierende UV/Vis-Strahlung besteht daher darin, lichtundurchlässige Trennfolien zu verwenden. Dies hat jedoch den Nachteil, dass ein Verarbeiter etwaige Verlegemarkierungen auf der Membran nicht mehr sehen kann. Solche Markierungen sind für eine Verklebung in Längsrichtung jedoch erforderlich um zu gewährleisten, dass die Membran über den gesamten Längsbereich gleichmäßig verklebt wird.

Bis dato wurden einige halbdurchsichtige Trennfolien beschrieben, diese weisen jedoch eine für die praktische Anwendung unzureichende Schutzwirkung gegenüber deaktivierender UV/Vis-Strahlung auf, so dass sie sich in der Praxis nicht bewährt haben. DE 10 2009 041841 offenbart eine kontakttransparente Folie umfassend wenigstens eine Schicht basierend auf wenigstens einem thermoplastischen Olefin-Homo- oder Copolymen und eine Kombination aus wenigstens einem organischen oder anorganischen Farbpigment oder Farbstoff und wenigstens einer UV-Strahlung absorbierenden und/oder reflektierenden, organisschen oder anorganischen Verbindung. Die aus DE 10 2009 041841 bekannte UV- und Licht-Schutzfolie hat eine Dicke von 150 - 500 µm und wird als Schlauchfolie in einem Kanalsanierungssystem verwendet.

Es besteht daher ein Bedarf an einer Trennfolie, die einerseits einen hohen Schutz gegenüber deaktivierender UV/Vis-Strahlung über einen längeren Zeitraum bietet und andererseits eine ausreichende Transmission im Bereich des sichtbaren Lichts aufweist, so dass farbige Markierungen auf einem Untergrund durch die Trennfolie sichtbar sind. Die vorliegende Erfindung schlägt eine Lösung für dieses Problem vor.

### Darstellung der Erfindung

Aufgabe der vorliegenden Erfindung ist es demzufolge, die aus dem vorstehend geschilderten Stand der Technik bekannten Trennfolien zu verbessern und eine Kompositstruktur umfassend eine Trennfolie und eine Klebstoffschicht vorzuschlagen, wobei die Trennfolie gleichzeitig eine hohe UV-Schutzwirkung eines darunter liegenden Klebstoffs und eine hinlängliche Transmission im Bereich des sichtbaren Lichts aufweist, so dass farbige Markierungen auf einer unter der Klebstoffschicht befindlichen Schicht durch die darüber liegenden Schichten des Klebstoffs und der Trennfolie erkennbar bleiben. Erfindungsgemäß wird dies durch eine Kompositstruktur nach Anspruch 1 erreicht.

Die vorliegende Erfindung schlägt Kompositstrukturen mit mindestens zwei Schichten vor, bei denen die erste Schicht durch eine wie in Anspruch 1 beschriebene Trennfolie und die zweite Schicht durch einen Klebstoff gebildet wird, und beide Schichten miteinander in Kontakt stehen. Schließlich schlägt die vorliegende Erfindung wasserdichte Membranen vor, die eine Beschichtung mit einem Klebstoff und auf der der wasserdichten Membran gegenüberliegenden Seite des Klebstoffs eine Trennfolie, wie sie vorstehend beschrieben ist, aufweist. Ein letzter Aspekt der vorliegenden Erfindung befasst sich mit Verwendungen entsprechender wasserdichter Membranen.

Die in der erfindungsgemäßen Kompositstruktur verwendete Trennfolie weist eine polymere Basis aus einem Polyolefin oder Ethylencopolymer auf. Geeignete Polyolefine sind unter anderem Polypropylen, Polyethylen, Polymethylpenten, Polyisobutylen oder Poly-n-butylen. Als geeignete Etyhlencopolymere kommen vor allem Ethylenvinylacetat (EVA), Ethylenvinylalkohol (E/VAL), Ethylenbutylacrylat-, Ethylenmethylacrylat- oder Ethylenacrylsäure-Copolymere in Betracht. Unter den vorgenannten sind Polypropylen und/oder Polyethylen aufgrund ihrer guten Verarbeitungseigenschaften und ihrer geringen Kosten besonders bevorzugt. Hinsichtlich ihrer Eigenschaften unterliegen die genannten Polymere keinen relevanten Beschränkungen, mit der Maßgabe, dass sie eine für eine Trennfolie ausreichende Festigkeit aufweisen sollten. Die Trennfolie enthält neben dem oder den Basispolymeren zudem mindestens ein organisches und zusätzlich mindestens ein anorganisches Pigment, sowie mindestens einen UV-Stabilisator. Zudem ist die Trennfolie dadurch gekennzeichnet, dass sie eine Transmission in Prozent im Bereich von 500 bis 700 nm zwischen 5 und 20% und eine Transmission im Bereich von 300 bis 500 nm von < 2%, vorzugsweise < 1% und besonders bevorzugt < 0,5% aufweist und dass sie auf 100 Mengenanteile Basispolymer 2 bis 10 Mengenanteile anorganisches Pigment, 0,2 bis 6 Mengenanteile organisches Pigment, und 0,05 bis 1 Mengenanteile UV-Stabilisator enthält, wobei die Trennfolie Titandioxid, als anorganisches Pigment enthält und wobei die Trennfolie einen UV-Stabilisator enthält ausgewählt aus der Liste bestehend aus gehinderte Amin Lichtstabilisatoren (HALS), Phosphite und sterisch gehinderte Phenole und wobei die Trennfolie eine Dicke im Bereich von 20 bis 100 µm aufweist. Die Transmissionen in diesen Bereichen sind jeweils mit einem UV/Vis-Photospektrometer zu bestimmen.

Wenn im Vorstehenden von einer Transmission in Prozent in einem Bereich die Rede ist, ist dies so zu verstehen, dass die Transmission über den gesamten Bereich innerhalb der angegebenen Grenzen liegen soll.

In einer bevorzugten Ausführungsform weist die in der erfindungsgemäßen Kompositstruktur verwendete Trennfolie eine Transmission in Prozent im Bereich von 500 bis 700 nm zwischen 8 und 15% auf.

Im Vorstehenden wurde bereits angegeben, dass die Trennfolie auf einem Polyolefin oder Ethylencopolymer basiert. Daraus ist abzuleiten, dass das Polymer oder die Polymere den wesentlichen Bestandteil der Trennfolie ausmachen, d.h., vorzugsweise mindestens 60 Gew.- %, besonders bevorzugt mindestens 80 Gew.-%, und am meisten bevorzugt mindestens 85 Gew.-% des Gesamtgewichts der Trennfolie.

Eine Zusammensetzung der Trennfolie lässt sich wie folgt beschreiben:
100 Mengenanteile Basispolymer,
0,2 bis 6 Mengenanteile organisches Pigment,
2 bis 10 Mengenanteile anorganisches Pigment,
0,05 bis 1 Mengenanteile UV-Stabilisator, und gegebenenfalls 0,05 bis 10 Mengenanteile Dispergiermittel. Die Mengenanteile beziehen sich auf die Masse.

Während sich aus diesen Angaben theoretisch auch Ausführungsformen ergeben, in denen die vorstehend angegebenen Transmissionseigenschaften nicht eingehalten werden, ist der Fachmann ohne Weiteres in der Lage, die Mengenanteile der jeweiligen Bestandteile so aufeinander abzustimmen, dass die Vorgaben für die Transmission in den angegebenen Bereichen erfüllt werden.

Erfindungsgemäß enthält die Trennfolie Titandioxid (TiO2) als anorganisches Pigment. Titandioxid absorbiert UV-Licht bis ca. 400 nm, bei höheren Wellenlängen im visuellen Bereich und im nahen Infrarotbereich reflektiert Titandioxid hingegen das Licht. Ein besonders bevorzugtes anorganisches Pigment ist stabilisiertes Titandioxid.

Titandioxid als einziger Zusatzbestandteil der Trennfolien wäre jedoch nicht ausreichend, um Klebstoffe ausreichend vor einer Alterung durch UV-Licht zu schützen. Erfindungsgemäß enthalten die Trennfolien daher ein organisches Pigment, bevorzugt ein organisches Pigment, das das sichtbare Licht im Bereich von etwa 400 nm bis etwa 550 nm absorbiert. Die ist so zu verstehen, dass einerseits das Absorptionsmaximum des organischen Pigments im Bereich von 400 bis 550 nm liegen und andererseits die Absorption außerhalb dieses Wellenlängenbereichs höchstens 30 % der maximalen Absorption betragen soll. Derartige organische Pigmente sind meist entweder gelb oder orange. Ein geeignetes organisches Pigment ist in diesem Zusammenhang zum Beispiel 3,3'-(1,4-phenylendiimino)-bis(4,5,6,7-tetrachloro)-1H-isoindol-1-on, das auch unter dem Handelsnamen Yellow 110 bekannt ist.

Anstelle eines anorganischen Pigments können die durch Anspruch 1 angegebenen Transmissionsgrenzen auch durch Kombination geeigneter organischer Pigmente eingestellt werden. Dies hat aber den Nachteil, dass solche Pigmente, im Gegensatz zu anorganischen Pigmenten, durch Einstrahlung von Sonnenlicht abgebaut werden können. Zudem wäre ein höherer Anteil an organischen Pigmenten erforderlich, was auf Grund der im Vergleich zu anorganischen Pigmenten wie TiO2 höheren Kosten mit Nachteilen verbunden ist. Erfindungsgemäß enthaltet die Trennfolie daher sowohl organisches als auch anorganisches Pigment.

Einen weiterer erforderlicher Bestandteil der in der erfindungsgemäßen Kompositstruktur verwendeten Trennfolien bildet ein UV-Stabilisator, der in der Regel als Radikalfänger wirkt und das Matrixpolymer (Polypropylen und/oder Polyethylen) vor vorzeitiger Alterung und Depolymerisierung schützt, ausgewählt aus der Liste bestehend aus HALS (hindered amine light stabilizers) bekannten Lichtstabilisatoren auf Basis gehinderter Amine, insbesondere in Form von Lichtstabilisatoren auf Basis von sterisch gehinderten N-Alkoxyaminen (auch als NOR-HALS bezeichnet), Phosphite, und sterisch gehinderte Phenole.

Erfindungsgemäss handelt es sich um einen UV-Stabilisator ausgewählt aus der Liste bestehend aus gehinderte Amin Lichtstabilisatoren (HALS), insbesondere in Form von gehinderten N-Alkoxyamin Lichtstabilisatoren, Phosphite und sterisch gehinderte Phenole.

Beispiele von verwendbaren Lichtstabilisatoren auf Basis gehinderter Amine sind unter anderem das Polymer von N,N'-Bis(2,2,6,6-tetramethyl-4-piperidinyl)-1,6-hexandiamin (als Chimassorb 2020 von BASF erhältlich) oder das Polyamin mit der CAS-Nr. 565450-39-7, das unter dem Handelsanmen Tinuvin 371 von Ciba Specialty Chemicals vertrieben wird. Ein besonders geeignetes Phosphit ist beispielsweise Tris(2,4-ditert-butylphenyl)phosphit, das unter dem Handelsnamen Irgaphos 168 von Ciba erhältlich ist.

Zudem können sterisch gehinderte Phenole, wie das unter dem Handelsnamen Irganox 1010 von BASF erhältliche Pentaerythritol tetrakis(3,5-di-tert-butyl-4-hydroxyhydrocinnamat in die Trennfolien einbezogen werden.

Um eine homogenere Verteilung von Pigmenten in der Trennfolie zu gewährleisten kann zudem ein Dispergiermittel, beispielsweise in Form von Calciumcarbonat, einbezogen werden. Als geeigneter Anteil für ein solches Dispergiermittel kann ein Bereich von 0,05 bis 10 Gew.-% angegeben werden.

Erfindungsgemäss weist die Trennfolie einen Querschnitt bzw. eine Dicke im Bereich von 20 bis 100 µm auf, wobei als bevorzugter Dickenbereich 40 bis 90 µm und als besonders bevorzugter Dickenbereich 50 bis 80 µm anzugeben sind. Die gewählte Dicke hängt einerseits von der erforderlichen Festigkeit des Materials ab, andererseits sollte die Dicke jedoch nicht zu hoch sein, da dies einen unnötigen Materialaufwand und damit verbunden höhere Kosten zur Folge hätte. Wie erwähnt, liegt der Dickenbereich ganz besonders bevorzugt im Bereich von 50 bis 80 µm. Einerseits hält sich dadurch der Materialaufwand in Grenzen, andererseits sind in diesem Bereich Markierungen auf einem Untergrund gut ersichtlich.

Erfindungsgemäß weist die Trennfolie zudem zweckmäßig auf mindestens einer Seite eine Silikonisierung auf. Durch diese kann bei einem Kontakt mit einem Klebstoff gewährleistet werden, dass die Trennfolie ohne allzu großen Kraftaufwand und rückstandsfrei von der Klebstoffschicht abgezogen werden kann. Die Silikonisierungseigenschaften sind zudem bevorzugt so ausgelegt, dass bis zum Abziehen von der Klebstoffschicht kein Nachlassen der Haftfestigkeit, zum Beispiel während der Lagerung, dem Transport und einer Baustellenanwendung, auftritt und, dass die Trennfolie einen ausreichenden Schutz vor äußeren Einflüssen wie Regen, Luftfeuchtigkeit, Baustellenstaub und anderen Umwelteinflüssen bietet.

Weiterhin ist es für die in der erfindungsgemäßen Kompositstruktur verwendete Trennfolie bevorzugt, wenn diese eine Prägung oder Kreppung aufweist. Dies erlaubt es, die Trennfolie auch in Applikationen einzusetzen, in denen ein mit Klebstoff und Trennfolie beschichtetes Produkt (beispielsweise eine wasserdichte Membran) auf Rollen aufgewickelt wird. Das Aufwickeln auf Rollen führt zu einer Stauchung der Trennfolie gegenüber einem darunter angebrachten Klebstoff. Weil Folien zwar verstreckt, aber nicht gestaucht werden können, hätte ein Aufwickeln ohne Prägung der Folie die Bildung von Kanülen (d.h., Bereichen, in denen die Trennfolie nicht mehr in direktem Kontakt zu einem darunter liegenden Klebstoff steht) zur Folge. Dies wird bei einer Prägung oder Kreppung der Trennfolie vermieden, da sich in diesem Fall die Folie relativ leicht wie eine Ziehharmonika falten kann.

In einer besonders bevorzugten Ausführungsform handelt es sich bei in der erfindungsgemäßen Kompositstruktur verwendeter Trennfolie um eine einschichtige Trennfolie mit einem Dickenbereich von 50 bis 80 µm. Ferner ist es bevorzugt, dass bei dieser Ausführungsform auf 100 Mengenanteile Basispolymer in Form von Polypropylen und/oder Polyethylen 2 bis 10 Mengenanteile anorganisches Pigment in Form von Titandioxid, 0,2 bis 6 Mengenanteile organisches Pigment, vorzugsweise 3,3'-(1,4-phenylendiimino)-bis(4,5,6,7-tetrachloro)-1H-isoindol-1-on, 0,05 bis 1 Mengenanteile UV-Stabilisator und gegebenenfalls 0,05 bis 10 Mengenanteile Dispergiermittel vorliegen. In einer ganz bevorzugten Ausführungsform weist diese Ausführungsform eine Prägung auf, was die Applikationsmöglichkeiten erweitert.

Die vorliegenden Erfindung betrifft, wie vorstehend erwähnt, eine Kompositstruktur mit mindestens zwei Schichten, bei der eine erste Schicht durch eine Trennfolie, wie sie vorstehend beschrieben ist, und eine mit der ersten Schicht in Kontakt stehende zweite Schicht durch einen Klebstoff gebildet wird. Bei dem Klebstoff handelt es sich bevorzugt um einen Haftklebstoff, insbesondere auf Basis eines thermoplastischen Kautschuks.

Eine weitere Ausführungsform der vorliegenden Erfindung betrifft eine wasserdichte Membran, die dadurch gekennzeichnet ist, dass sie eine Beschichtung mit einem Klebstoff, bevorzugt einem Haftklebstoff z.B. auf Basis eines thermoplastischen Kautschuks, und auf der der wasserdichten Membran gegenüberliegenden Seite des Klebstoffs eine Trennfolie, wie sie vorstehend beschrieben ist, aufweist.

Das Material der wasserdichten Membran kann aus sämtlichen Materialien bestehen, die im Stand der Technik zu diesem Zweck beschrieben sind. Vorzugsweise handelt es sich um eine wasserdichte Membran aus thermoplastischen Olefinen, insbesondere aus Polypropylen (PP) oder Polyethylen (PE), Polyvinylchlorid oder flexibilisierten Polyolefinen (FPO). Es kommen jedoch auch andere Materialien für wasserdichte Membranen in Betracht, wie beispielsweise Polyethylenterephthalat (PET), Polystyrol (PS), Polyamide (PA), Ethylen/Vinylacetatcopolymere (EVA) oder chlorsulfonierte Polyethylene.

Ein besonders bevorzugtes Material für die wasserdichte Membran ist ein flexibilisiertes Polyolefin, beispielsweise in Form eines thermoplastischen Elastomers auf Olefinbasis (TPE-O, TPO) oder eines Ethylen-Propylen-Dien-Kautschuks (EPDM), oder Mischungen davon mit Ethylenvinylacetat oder Ethylenbutylacrylat. Besonders geeignete Mischungen sind Mischungen eines thermoplastischen Elastomers auf Olefinbasis mit Ethylenvinylacetat, und Mischungen von Polyethylen mit Ethylenvinylacetat oder Ethylenbutylacrylat.

Die wasserdichte Membran kann eine Dicke von 0,05 bis 2,5 mm, bevorzugt 0,50 mm bis 2,0 mm, und insbesondere 0,50 bis 1,3 mm, aufweisen.

Im Rahmen der vorliegenden Erfindung weist die wasserdichte Membran zudem vorzugsweise eine Beschichtung aus Klebstoff und der Trennfolie nicht über die gesamte Fläche der Membran, sondern nur auf einem Teil ihrer Fläche auf. Besonders bevorzugt ist die wasserdichte Membran im Bereich mindestens einer ihrer Kanten mit dem Klebstoff und der Trennfolie beschichtet, wobei Klebstoff und Trennfolie zweckmäßig in Form eines Streifens vorzugsweise einer Dicke von 5 bis 15 cm und insbesondere etwa 10 cm aufgetragen sind.

Für die wasserdichte Membran ist es weiterhin bevorzugt, wenn sie Markierungsbereiche aufweist, die sich farblich von den nicht markierten Bereichen der Membran abheben. Diesbezüglich ist es besonders bevorzugt, wenn der farbliche Kontrast zwischen dem Markierungsbereich und den nicht markierten Bereichen der Membran möglichst hoch ist. Dies erleichtert es für einen Verarbeiter, die Verlegemarkierungen auch durch die Beschichtung aus Klebstoff und Trennfolie zu erkennen, und gewährleistet somit, dass eine fachgerechte Verklebung verschiedener Folienbahnen in Längsrichtung möglich ist. Zudem sollte die Farbe der Markierung möglichst keine ähnlichen Absorptionsbereich wie das organische Pigment aufweisen.

Ein letzter Aspekt der vorliegenden Erfindung betrifft die Verwendung einer wasserdichten Membran, wie sie im Vorstehenden geschildert ist, zum Abdichten von Bauwerken gegenüber Wassereintritt. Dabei ist die Oberfläche, auf der die Membran angebracht wird, nicht entscheidend, d.h., es können verschiedenste Oberflächen, wie Betonflächen, Holzschalungen oder auch druckstabile Dämmstoffe mit der wasserdichten Membran abgedichtet werden. In einer bevorzugten Ausführungsform der vorstehend beschriebenen Verwendung wird eine erste mit einer zweiten Membranlage verbunden, indem die Trennfolie von der ersten Membranlage entfernt, die Membranlage im Bereich des Klebstoffauftrags über die zweite Membranlage gelegt und nach Aktivierung des Klebstoffs mit dieser verklebt wird. Aus dem Vorstehenden ergibt sich, dass die erste Membranlage so über die zweite Membranlage zu legen ist, dass die Klebstoffbeschichtung der ersten Membranlage mit der zweiten Membranlage in Kontakt gebracht werden kann. Wird als Klebstoff ein Haftklebstoff verwendet, so erfolgt die Aktivierung und Verklebung des Haftklebstoffs durch Andrücken der oberen auf die untere Membranlage über den gesamten Bereich des Klebstoffauftrags.

Im Folgenden wird die vorliegende Erfindung anhand einiger Beispiele näher weiter erläutert:

### Beispiel

Es wurde eine Trennfolie auf Basis einer Polypropylenmatrix (100 Mengenanteile), Titandioxid (7 Mengenanteile), des organischen Farbpigments Yellow 110 mit 3 Mengenanteilen und einem säurebeständigen UV-Stabilisator auf Basis eines sterisch gehinderten N-Alkoxyamins (NOR HALS) in 0,3 Mengenanteilen hergestellt. Die Zusammensetzung wurde zu einer Folie mit einer Dicke von 60 µm extrudiert und auf einer Seite mit einer Silikonisierung versehen. Anschließend wurde eine 0.5 mm dicke Membran (aus einer Mischungen eines thermoplastischen Elastomers auf Olefinbasis mit Ethylenvinylacetat) mit einem Haftklebstoff auf Basis eines thermoplastischen Kautschuks (SikaMelt^{®} 9240) beschichtet, auf dem anschließend die beschriebene Trennfolie angebracht wurde.

Der so hergestellte Probekörper wurde mit einem Metallhalogid-Hochdruckstrahler mit einer Leistung von ca. 910 W/m<2> für unterschiedliche Zeiträume belichtet. Anschließend wurde die Klebekraft wurde mittels FTIR (anhand von Änderungen in den Signalen der Carbonylgruppen), Fingertest und Abziehen des Messmusters vom Probenkörper bestimmt.

Es zeigte sich, dass der Haftklebstoff ohne Trennfolie bereits nach etwa 5 bis 10 Stunden Belichtung deaktiviert wird. Daraus lässt sich ableiten, dass der Klebstoff nach etwa 35 bis 65 Stunden in der Außenanwendung (50° nördlicher Breite) nicht mehr verwendbar wäre. Ein durch die erfindungsgemäße Trennfolie geschützter Haftklebstoff zeigte hingegen auch nach 600 Stunden Belichtung keine Klebekraftänderung. Unter realen Bedingungen würde der Klebstoff daher auch nach 3900 Stunden noch seine volle Klebekraft aufweisen.

Eine Trennfolie gemäß den oben angegebenen Spezifikationen mit einer Dicke von 80 µm, sowie Trennfolien auf Basis von HDPE mit einem Durchmesser von 60 µm zeigten vergleichbare Ergebnisse.

Im Folgenden wurde eine Dichtigkeitsprüfung der oben beschriebenen Polypropylenmembran mit 60 µm Dicke gemäß ASTM D 5385 durchgeführt. Hierzu wurde eine gekreppte Trennfolie verwendet. Zur Prüfung wird die Probe in einer Vorrichtung nach ASTM D 5385 eingespannt und auf der Prüffläche mit Wasserdruck belastet. Damit wird die flächige Hinterlaufsicherheit der Membran (Probe mit vorgestanztem Loch) oder die Dichtigkeit einer Überlappungsverklebung überprüft. Die Prüfung erfolgte jeweils über drei Druckstufen mit einem Prüfdruck von 1 Bar für 4 Stunden in der ersten Stufe, einem Prüfdruck von 3 Bar für 20 Stunden in der zweiten Stufe sowie einem Prüfdruck von 5 bar für 6 Tage in der dritten Stufe. Nach Abschluss der Prüfung konnte für die erfindungsgemäße Membran festgestellt werden, dass die Papiere in den Prüföffnungen trocken sind. Die Haftung von Membran zu Membran war in diesem Fall immer noch als gut zu beurteilen und es konnte kein Hinterlaufen des Stoßes mit Wasser sowie keine Kanülen beobachtet werden.

## Patentansprüche

1. Kompositstruktur mit mindestens zwei Schichten, bei der eine erste Schicht durch eine Trennfolie und eine mit der ersten Schicht in Kontakt stehende zweite Schicht durch einen Klebstoff gebildet wird, wobei die Trennfolie eine Trennfolie auf Basis eines Polyolefins oder Ethylencopolymers mit einem Gehalt an organischem und anorganischem Pigment und mindestens einem UV-Stabilisator ist, **dadurch gekennzeichnet, dass** die Trennfolie eine Transmission in % im Bereich von 500 bis 700 nm zwischen 5 und 20% und eine Transmission im Bereich von 300 bis 500 nm von < 2 % aufweist, wobei die Transmission jeweils mit einem UV/Vis-Photospektrometer zu bestimmen ist und wobei die Trennfolie auf 100 Mengenanteile Basispolymer 2 bis 10 Mengenanteile anorganisches Pigment, 0,2 bis 6 Mengenanteile organisches Pigment, und 0,05 bis 1 Mengenanteile UV-Stabilisator enthält und wobei die Trennfolie Titandioxid, als anorganisches Pigment enthält und wobei die Trennfolie einen UV-Stabilisator enthält ausgewählt aus der Liste bestehend aus gehinderte Amin Lichtstabilisatoren (HALS), Phosphite und sterisch gehinderte Phenole und wobei die Trennfolie eine Dicke im Bereich von 20 bis 100 µm aufweist.

2. Kompositstruktur nach Anspruch 1, **dadurch gekennzeichnet, dass** die Trennfolie eine Transmission in % im Bereich von 500 bis 700 nm zwischen 8 und 15% aufweist.

3. Kompositstruktur nach einem der vorstehenden Ansprüche, **dadurch gekennzeichnet, dass** die Trennfolie ein organisches Pigment enthält, dass sichtbares Licht im Bereich von 400 nm bis 550 nm absorbiert.

4. Kompositstruktur nach einem der vorstehenden Ansprüche, **dadurch gekennzeichnet, dass** die Trennfolie einen UV-Stabilisator enthält ausgewählt aus der Liste bestehend aus gehinderte Amin Lichtstabilisatoren (HALS) in Form von gehinderten N-Alkoxyamin Lichtstabilisatoren, Phosphite und sterisch gehinderte Phenole.

5. Kompositstruktur nach einem der vorstehenden Ansprüche, **dadurch gekennzeichnet, dass** die Trennfolie auf Polypropylen und/oder Polyethylen basiert.

6. Kompositstruktur nach einem der vorstehenden Ansprüche, **dadurch gekennzeichnet, dass** die Trennfolie einschichtig ist, eine Dicke im Bereich von 50 bis 80 µm aufweist und dass auf 100 Mengenanteile Basispolymer in Form von Polypropylen und/oder Polyethylen 2 bis 10 Mengenanteile anorganisches Pigment in Form von Titandioxid, 0,2 bis 6 Mengenanteile organisches Pigment und 0,05 bis 1 Mengenanteile UV-Stabilisator vorliegen.

7. Kompositstruktur nach einem der vorstehenden Ansprüche, **dadurch gekennzeichnet, dass** der Klebstoff ein Haftklebstoff auf Basis eines thermoplastischen Kautschuks ist.

8. Wasserdichte Membran, **dadurch gekennzeichnet, dass** sie eine Beschichtung mit einem Klebstoff, und auf der der wasserdichten Membran gegenüberliegenden Seite des Klebstoffs eine Trennfolie auf Basis eines Polyolefins oder Ethylencopolymers mit einem Gehalt an organischem und anorganischem Pigment und mindestens einem UV-Stabilisator, aufweist, **dadurch gekennzeichnet, dass** die Trennfolie eine Transmission in % im Bereich von 500 bis 700 nm zwischen 5 und 20% und eine Transmission im Bereich von 300 bis 500 nm von < 2 % aufweist, wobei die Transmission jeweils mit einem UV/Vis-Photospektrometer zu bestimmen ist und wobei die Trennfolie Titandioxid, als anorganisches Pigment enthält und wobei die Trennfolie einen UV-Stabilisator enthält ausgewählt aus der Liste bestehend aus gehinderte Amin Lichtstabilisatoren (HALS), Phosphite und sterisch gehinderte Phenole und wobei die Trennfolie eine Dicke im Bereich von 20 bis 100 µm aufweist.

9. Wasserdichte Membran nach Anspruch 8, **dadurch gekennzeichnet, dass** sie im Bereich mindestens einer ihrer Kanten mit dem Klebstoff und der Trennfolie beschichtet ist.

10. Wasserdichte Membran nach einem der Ansprüche 8 bis 9, **dadurch gekennzeichnet, dass** sie Markierungsbereiche aufweist, die sich farblich von den nicht markierten Bereichen der Membran abheben.

11. Verwendung einer wasserdichten Membran nach einem der Ansprüche 8 bis 10 zum Abdichten von Bauwerken gegen Wasser.

12. Verwendung gemäß Anspruch 11, **dadurch gekennzeichnet, dass** eine erste Membranlage mit einer zweiten Membranlage verbunden wird, indem die Trennfolie von der ersten Membranlage entfernt, die Membranlage im Bereich des Klebstoffauftrags über die zweite Membranlage gelegt und nach Aktivierung des Klebstoffs mit dieser verklebt wird.

## Claims

1. Composite structure with at least two layers, where a first layer is formed by a release film and a second layer, in contact with the first layer, is formed by an adhesive, **characterized in that** the release film is based on a polyolefin or ethylene copolymer with a content of organic and inorganic pigment and at least one UV stabilizer, where the transmittance in % of the release film in the range from 500 to 700 nm is from 5 to 20%, and in the range from 300 to 500 nm is < 2%, where the transmittance is to be determined in each case with a UV/visible photospectrometer, and where the release film comprises, for every 100 parts of main polymer, from 2 to 10 parts of inorganic pigment, from 0.2 to 6 parts of organic pigment, and from 0.05 to 1 part of UV stabilizer, and where the release film comprises, as inorganic pigment, titanium dioxide, and where the release film comprised a UV stabilizer selected from the list consisting of hindered amine light stabilizers (HALS), phosphites and sterically hindered phenols, and where the release film has a thickness in the range from 20 to 100 um.

2. Composite structure according to Claim 1, **characterized in that** the transmittance in % of the release film in the range from 500 to 700 nm is from 8 to 15%.

3. Composite structure according to either of the preceding claims, **characterized in that** the release film comprises an organic pigment that absorbs visible light in the range from 400 nm to 550 nm.

4. Composite structure according to any of the preceding claims, **characterized in that** the release film comprises a UV stabilizer selected from the list consisting of hindered amine light stabilizers (HALS) in the form of hindered N-alkoxyamine light stabilizers, phosphites and sterically hindered phenols.

5. Composite structure according to any of the preceding claims, **characterized in that** the release film is based on polypropylene and/or polyethylene.

6. Composite structure according to any of the preceding claims, **characterized in that** the release film has one layer, its thickness is in the range from 50 to 80 µm, and **in that** for every 100 parts of main polymer in the form of polypropylene and/or polyethylene there are from 2 to 10 parts of inorganic pigment present in the form of titanium dioxide, from 0.2 to 6 parts of organic pigment present, and from 0.05 to 1 part of UV stabilizer present.

7. Composite structure according to any one of previous claims, **characterized in that** the adhesive is a pressure-sensitive adhesive based on a thermoplastic rubber.

8. Waterproof membrane, **characterized in that** it has a coating with an adhesive, and, on that side of the adhesive that is opposite to the waterproof membrane, has a release film based on a polyolefin or ethylene copolymer with a content of organic and inorganic pigment and at least one UV stabilizer, **characterized in that** the transmittance in % of the release film in the range from 500 to 700 nm is from 5 to 20%, and in the range from 300 to 500 nm is < 2%, where the transmittance is to be determined in each case with a UV/visible photospectrometer, and where the release film comprises, as inorganic pigment, titanium dioxide, and where the release film comprised a UV stabilizer selected from the list consisting of hindered amine light stabilizers (HALS), phosphites and sterically hindered phenols, and where the release film has a thickness in the range from 20 to 100 um.

9. Waterproof membrane according to Claim 8, **characterized in that** in the region of at least one of its edges it has been coated with the adhesive and the release film.

10. Waterproof membrane according to one Claims 8 to 9, **characterized in that** it has marking regions which by virtue of their color are clearly distinguishable from the unmarked regions of the membrane.

11. Use of a waterproof membrane according to any of Claims 8 to 10 for the sealing of buildings in respect of water.

12. Use according to Claim 11, **characterized in that** a first membrane ply is bonded to a second membrane ply **in that** the release film is removed from the first membrane ply and in the region of adhesive application the membrane ply is placed over the second membrane ply and is adhesive-bonded thereto after activation of the adhesive.

## Revendications

1. Structure composite comportant au moins deux couches, dans laquelle une première couche est formée par une feuille de séparation et une deuxième couche en contact avec la première couche est formée par un adhésif, la feuille de séparation étant une feuille de séparation à base d'une polyoléfine ou d'un copolymère d'éthylène comportant une teneur en pigment organique et inorganique et au moins un stabilisant UV, **caractérisée en ce que** la feuille de séparation présente une transmission en % dans la plage de 500 à 700 nm entre 5 et 20 % et une transmission dans la plage de 300 à 500 nm de < 2 %, la transmission devant être déterminée à chaque fois avec un photospectromètre UV/Vis et la feuille de séparation contenant, par rapport à 100 parts de polymère de base, 2 à 10 parts de pigment inorganique, 0,2 à 6 parts de pigment organique, et 0,05 à 1 part de stabilisant UV et la feuille de séparation contenant du dioxyde de titane en tant que pigment inorganique et la feuille de séparation contenant un stabilisant UV choisi dans la liste constituée par des photostabilisants de type amine encombrée (HALS), des phosphites et des phénols stériquement encombrés, et la feuille de séparation présentant une épaisseur dans la plage de 20 à 100 µm.

2. Structure composite selon la revendication 1, **caractérisée en ce que** la feuille de séparation présente une transmission en % dans la plage de 500 à 700 nm entre 8 et 15 %.

3. Structure composite selon l'une quelconque des revendications précédentes, **caractérisée en ce que** la feuille de séparation contient un pigment organique qui absorbe la lumière visible dans la plage de 400 nm à 550 nm.

4. Structure composite selon l'une quelconque des revendications précédentes, **caractérisée en ce que** la feuille de séparation contient un stabilisant UV de la liste constituée par des photostabilisants de type amine encombrée (HALS) sous forme de photostabilisants de type N-alcoxyamine encombrée, de phosphites et de phénols stériquement encombrés.

5. Structure composite selon l'une quelconque des revendications précédentes, **caractérisée en ce que** la feuille de séparation est à base de polypropylène et/ou de polyéthylène.

6. Structure composite selon l'une quelconque des revendications précédentes, **caractérisée en ce que** la feuille de séparation est monocouche, présente une épaisseur dans la plage de 50 à 80 um et **en ce que**, par rapport à 100 parts de polymère de base sous forme de polypropylène et/ou de polyéthylène, 2 à 10 parts de pigment inorganique sous forme de dioxyde de titane, 0,2 à 6 parts de pigment organique, et 0,05 à 1 part de stabilisant UV sont présentes.

7. Structure composite selon l'une quelconque des revendications précédentes, **caractérisée en ce que** l'adhésif est un adhésif autocollant à base d'un caoutchouc thermoplastique.

8. Membrane étanche à l'eau, **caractérisée en ce qu'**elle présente un revêtement comportant un adhésif, et sur le côté de l'adhésif opposé à la membrane étanche à l'eau, une feuille de séparation à base d'une polyoléfine ou d'un copolymère d'éthylène comportant une teneur en pigment organique et inorganique et au moins un stabilisant UV, **caractérisée en ce que** la feuille de séparation présente une transmission en % dans la plage de 500 à 700 nm entre 5 et 20 % et une transmission dans la plage de 300 à 500 nm de < 2 %, la transmission devant être déterminée à chaque fois avec un photospectromètre UV/Vis et la feuille de séparation contenant du dioxyde de titane en tant que pigment inorganique et la feuille de séparation contenant un stabilisant UV choisi dans la liste constituée par des photostabilisants de type amine encombrée (HALS), des phosphites et des phénols stériquement encombrés, et la feuille de séparation présentant une épaisseur dans la plage de 20 à 100 um.

9. Membrane étanche à l'eau selon la revendication 8, **caractérisée en ce qu'**elle est revêtue dans une zone d'au moins un de ses bords par l'adhésif et la feuille de séparation.

10. Membrane étanche à l'eau selon l'une quelconque des revendications 8 à 9, **caractérisée en ce qu'**elle présente des zones de marquage qui se distinguent de manière colorée des zones non marquées de la membrane.

11. Utilisation d'une membrane étanche à l'eau selon l'une quelconque des revendications 8 à 10 pour l'étanchéification de constructions contre l'eau.

12. Utilisation selon la revendication 11, **caractérisée en ce qu'**une première couche de membrane est reliée avec une deuxième couche de membrane en retirant la feuille de séparation de la première couche de membrane, en plaçant la couche de membrane au-dessus de la deuxième couche de membrane dans la zone de l'application de colle et en la collant à celle-ci après activation de l'adhésif.
